# EUROPEAN PATENT SPECIFICATION

(11) **EP 0 732 822 B1**
(45) Date of publication and mention of the grant of the patent: **19.05.2004**
(21) Application number: 96301732.2
(22) Date of filing: 14.03.1996
(51) Int. Cl.: H04H 1/00

(54) **FM multiplex broadcast receiving circuit for detecting presence or absence of subcarrier**
Empfängerschaltung für UKW-Rundfunkprogramme mit multiplizierter Datenübertragung für die Feststellung der Anwesenheit von Unterträgern
Circuit pour récepteur de radiodiffusion en modulation de fréquence pour capter des signaux multiplexés pour détecter la présence ou l'absence d'une sous-porteuse

(30) Priority: 16.03.1995 JP 5739495
(43) Date of publication of application: 18.09.1996
(73) Proprietor: SANYO ELECTRIC Co., Ltd., Moriguchi-shi, Osaka 570 (JP)
(72) Inventor: Kimura, Kazuhiro, Fukaya-shi, Saitama-ken (JP); Hayashibe, Shigeaki, Oizumi-machi, Ora-gun, Gunma-ken (JP); Hirakoso, Yutaka, Saitama-ken (JP); Masumoto, Takahiko, Oizuma-machi, Ora-gun, Gunma-ken (JP); Ishimura, Shizuka, Oizuma-machi, Ora-gun, Gunma-ken (JP); Ozawa, Toshiyuki, Ota-shi, Gunma-ken (JP); Suka, Munehiro, Tokyo-to (JP)
(74) Representative: Cross, Rupert Edward Blount

(56) References cited:
- EP-A- 0 066 037
- EP-A- 0 503 202
- EP-A- 0 653 857
- WO-A-85/03824
- DE-A- 3 934 282
- DE-C- 4 231 121

## Description

### Background of the Invention

### [Field of the Invention]

The present invention relates to an FM multiplex broadcast receiving circuit for receiving an FM multiplex signal in which a digital information signal is superimposed on an FM broadcast signal, and also to a receiver using such a circuit.

### [Description of the Prior Art]

A RDS (radio data system) used in Europe has hitherto been known as a system for superimposing other information on an FM broadcast signal and transmitting the resultant signal.

A receiver for receiving an FM multiplex broadcast, such as an RDS broadcast, decides whether a broadcast signal currently being received is a multiplex broadcast or not by detecting the presence or absence of multiplex information. In general, the receiver decides this in accordance with the level of an output of an integration and discharge circuit of a decoder for demodulating multiplex information, as disclosed in the official gazette of Japanese Patent Laid-Open No. 104323/1991 (JP-A-03104323).

However, when a receiver is constituted so as to detect the presence or absence of multiplex broadcast in accordance with only the output level of an integration and discharge circuit like the above prior art, there is possibility of erroneous detection due to interference in a propagation path, such as multipath noise.

DE-A-3934282 discloses an RDS receiving circuit, in which operation of the receiver is controlled in response to generation of a detection signal indicating loss of the locked condition of a PLL in the data demodulator of the circuit.

### Summary of the Invention

The present invention comprises an FM multiplex broadcast receiving circuit for receiving an FM multiplex signal in which a digital information signal is superimposed on an FM broadcast signal, comprising detection means for detecting whether a broadcast signal being received is a multiplex broadcast or not characterised in that said detection means is responsive to block synchronisation detection of a received digital information signal.

The present invention makes it possible to achieve a secure detecting operation because multiplex information is detected in accordance with digital information.

Moreover, because a multiplex signal can temporarily be detected by detecting a subcarrier signal, it is possible to search for a multiplex station in a short time.

Furthermore, it is possible to prevent erroneous detection when multipath noise is received.

### Brief Description of the Drawings

Figure 1 is an illustration showing a first embodiment of the present invention;
Figure 2 is an illustration showing the structure of a synchronization circuit section;
Figure 3 is an illustration showing a second embodiment of the present invention;
Figure 4 is an illustration showing a structure of a subcarrier signal detecting section;
Figure 5 is an illustration showing another structure of the subcarrier signal detecting section;
Figure 6 is an illustration showing a third embodiment of the present invention;
Figure 7 is an illustration showing a structure of a multipath detecting section; and
Figure 8 is an illustration showing a fourth embodiment of the present invention.

### Detailed Description of the Preferred Embodiments [Embodiments]

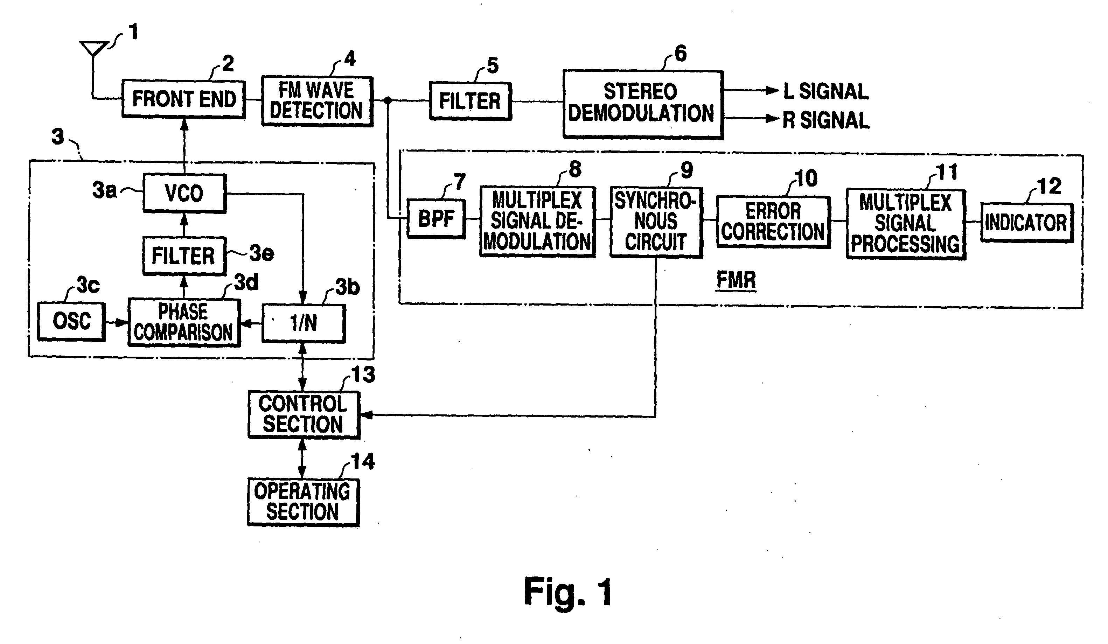

Figure 1 is an illustration showing an embodiment of the present invention, in which numeral 1 denotes an antenna, 2 denotes a front end for receiving a high-frequency signal from the antenna 1 and converting the signal into a predetermined intermediate-frequency (IF) signal, and 3 denotes a phase-locked loop (PLL) circuit for supplying a synchronized signal to the front end 2. The phase lock loop circuit 3, as is generally known, comprises a voltage controlled oscillator (VCO) 3a for outputting a local oscillation signal, a 1/N frequency divider 3b for dividing an output of the VCO at a frequency dividing ratio N (N is a positive integer), a reference frequency oscillator (OSC) 3c, a phase comparator 3d for comparing the phase of a frequency-divided output supplied from the 1/N frequency divider with that of a reference frequency signal supplied from the reference frequency oscillator (OSC) 3c, and a filter 3e for receiving an output signal from the phase comparator 3d and supplying a control voltage corresponding to a phase difference to the VCO 3a. Numeral 4 denotes an FM wave detector for FM-wave-detecting an intermediate frequency signal supplied from the front end 2 and outputting an FM wave detection signal, 5 denotes a filter for passing a signal component (stereo composite signal) of 53 KHz or lower from within an output signal of the FM wave detector 4, 6 denotes a stereo demodulation circuit for stereo-demodulating a signal passing through the filter 5, 7 denotes a band pass filter having a central frequency of 76 KHz for extracting multiplex information from an output signal of the FM wave detector 4, 8 denotes a multiplex signal demodulating section for performing MSK (Minimum Shift Keying) demodulation processing for a signal passing through the band pass filter 7, 9 denotes a synchronization circuit section for synchronously regenerating a demodulated multiplex signal, 10 denotes an error correcting section for detecting and correcting an error of a synchronously-regenerated signal, 11 denotes a multiplex signal processing section for processing a demodulated multiplex signal to perform predetermined signal processing, 12 denotes an indicator to which the data processed by the multiplex signal processing section 11 is supplied, 13 denotes a control section for receiving a synchronous detection signal from the synchronization circuit 9 and supplying frequency-dividing-ratio data N to the 1/N frequency divider of the PLL circuit 3, and 14 denotes an operating section provided with a channel select command key and a band select key.

In this embodiment, an FM multiplex broadcast receiving circuit FMR comprises the band pass filter 7, multiplex signal demodulating section 8, synchronization circuit 9, error correcting section 10, and multiplex signal processing section 11.

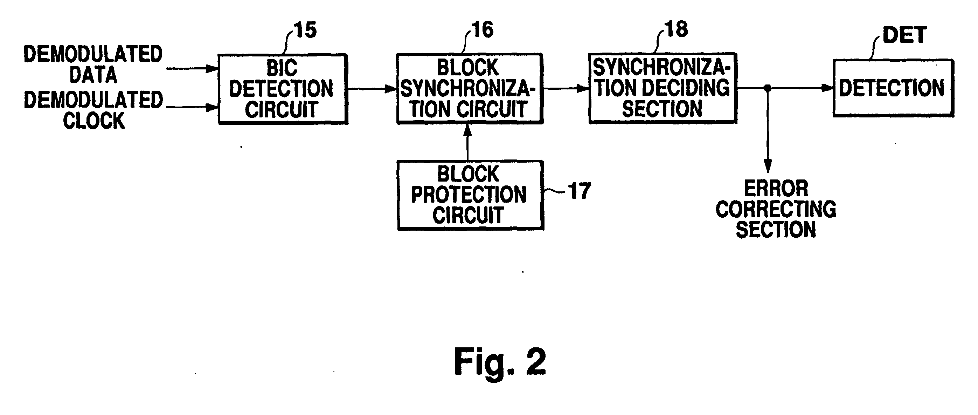

Figure 2 is an illustration showing an essential portion of the synchronization circuit section 9, in which numeral 15 represents a BIC detection circuit for detecting a BIC code (block identification code) included in demodulated data in accordance with the demodulated data and demodulated clock supplied from the multiplex signal demodulating section 8, 16 denotes a block synchronization circuit for performing block synchronization processing in accordance with an output of the BIC detection circuit 15, 17 denotes a block protection circuit for setting an allowable number of bit errors when block synchronization processing is performed by the block synchronization circuit 16, and 18 denotes a synchronization determination section for determining synchronism in accordance with an output of the block synchronization circuit 16 and supplying a decision output to the control section 13 and the error correcting section 10.

Operations of the embodiment shown in Fig. 1 are described below.

When channel selection is performed in accordance with the operation of the operating section 14 and a broadcast signal at a predetermined signal level is received, the broadcast signal received by the antenna 1 is converted into a predetermined intermediate-frequency signal in the front end 2 by using an oscillation signal (local oscillation signal) supplied from the VCO of the PLL circuit 3. Then, the intermediate frequency signal is FM-demodulated by the FM wave detector 4. An output signal from the FM wave detector 4 is supplied to the stereo demodulation circuit 6 through the filter 5 and moreover, supplied to the multiplex signal demodulation circuit 9 through the band pass filter 7. The signal passing through the filter 5 (that is, a stereo composite signal) is stereo-demodulated by the stereo demodulation circuit 6 and output as an L signal and a R signal.

The signal passing through the band pass filter 7 is supplied to and demodulated by the multiplex signal demodulating section 8. The multiplex signal demodulated by the multiplex signal demodulating section 8 is supplied to the synchronous circuit section 9. The synchronous circuit section 9 detects a BIC code included in demodulated data by using a demodulated clock, and then outputs an allowance signal to the synchronization determination section 18 when, compared to a predetermined BIC code, the detected BIC code has a number of error bits equal to or less than a predetermined number of bits. When a signal is supplied to the synchronization deciding section 18 from the block synchronization circuit 16 up to a predetermined number of times, the determination section 18 determines that synchronization has been established and outputs a synchronization determined signal. The synchronization determined signal is supplied to a detecting section DET and moreover to the error detecting and correcting section 10. The detecting section DET detects that a signal currently being received is a multiplex broadcast signal in accordance with the supplied synchronization determined signal and supplies a detection signal to the control section 13. Moreover, the error detecting and correcting section 10 executes error detection and correction processing in accordance with the signal.

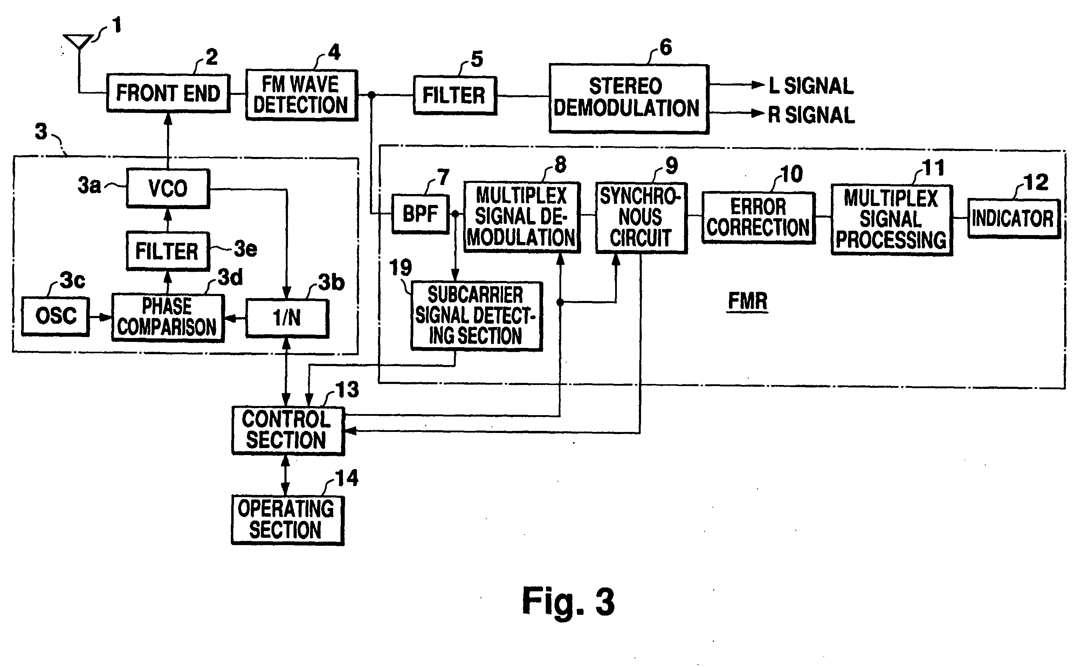

Figure 3 is an illustration showing the second embodiment which is provided with a subcarrier signal detecting section 19 to which an output of the band pass filter 7 in Fig. 1 is supplied. In this embodiment, the subcarrier signal detecting section also constitutes the FM multiplex broadcast receiving circuit FMR.

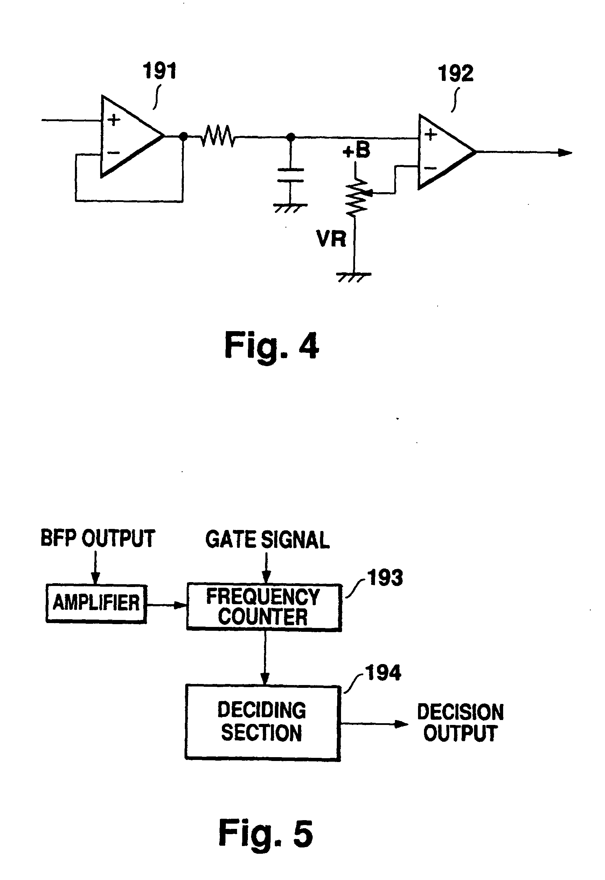

Figure 4 is an illustration showing a structure of the subcarrier signal detecting section 19 for detecting the level of a subcarrier signal, which comprises an integration circuit 191 and a decision circuit 192 for generating a determination signal by comparing an output of the integration circuit 191 with a reference signal VR. The value of the reference signal Vref is changed in accordance with the level of an L-R signal of a stereo composite signal when a multiplex broadcast signal is L-MSK-modulated.

Figure 5 is an illustration showing a structure of the subcarrier signal detecting section 19 for detecting the frequency of a subcarrier signal, which comprises a counter 193 set to an operational state for a predetermined time by a gate signal supplied from the control section 13, and which counts the frequency of a signal passing through the band pass filter 7 during operation, and a deciding section 194 for deciding whether a signal with a predetermined frequency is received or not in accordance with a value counted by the counter 193.

According to the embodiment in Fig. 3, when a broadcast wave signal is received under the control of the control section 13, it is first detected by the subcarrier signal detecting section 19 whether a signal passing through the band pass filter 7 includes a subcarrier signal or not.

That is, in the case of the circuit in Fig. 4, a signal passing through the band pass filter 191 is integrated and thereafter compared with the reference signal VR. When an integration circuit output is larger than the reference signal VR, an H-level detection signal is supplied to the control section 13 and the control section 13 temporarily determines that a multiplex signal is present in accordance with the H-level detection signal and supplies an operation signal to the multiplex signal demodulating section 8 and/or the synchronous circuit section 9 to make the sections 8 and/or 9 perform synchronization processing of received data. As a result, when block synchronization is determined and a determination signal is supplied from the synchronization determination section 18, the control section 13 determines that a currently-received broadcast signal is a multiplex broadcast.

However, when the presence of a subcarrier signal is not detected by the subcarrier signal detecting section 19, the control section 13 determines that no multiplex signal is present and therefore, it does not demodulate a multiplex signal.

The circuit in Fig. 5 is only different from the circuit in Fig. 4 in that it is temporarily determined that a multiplex signal is present when a value counted within a predetermined time is kept in a predetermined range and it is determined that no multiplex signal is present when the value is out of the range.

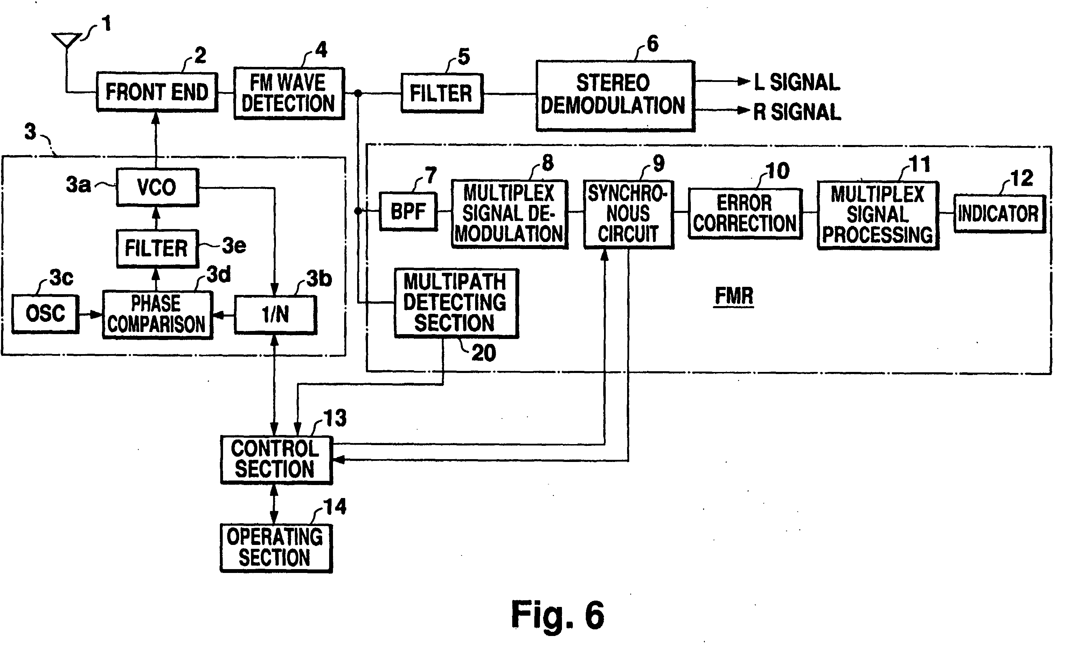

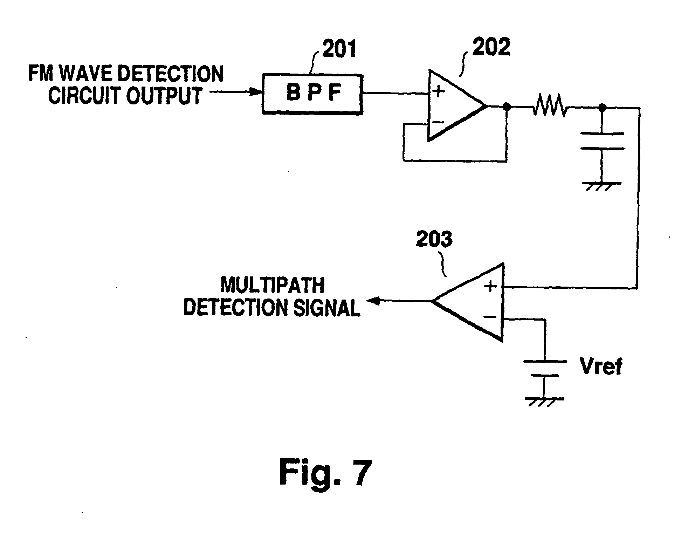

Figure 6 is an illustration showing the third embodiment obtained by providing a multipath detecting section 20 for the embodiment in Fig. 1. In the case of this embodiment, the multipath detecting section 20 also constitutes the FM multiplex broadcast receiving circuit FMR. Figure 7 is an illustration showing a definite example of the multipath detecting section 20, which comprises a band pass filter 201 having a central frequency of 57 KHz, an integration circuit 202 for integrating a signal passing through the band pass filter 201, and a decision circuit 203 for comparing an output of the integration circuit 202 with a reference value and outputting a multipath detection signal when an integrated output is equal to or larger than the reference value.

In the embodiment in Fig. 6, the control section 13 supplies a control signal to the synchronization circuit 9 when a multipath is detected by the multipath detecting section 20, as well as decreasing an allowable number of bit errors set by the block protection circuit 17 and moreover lowering the probability of erroneous determination of block synchronization.

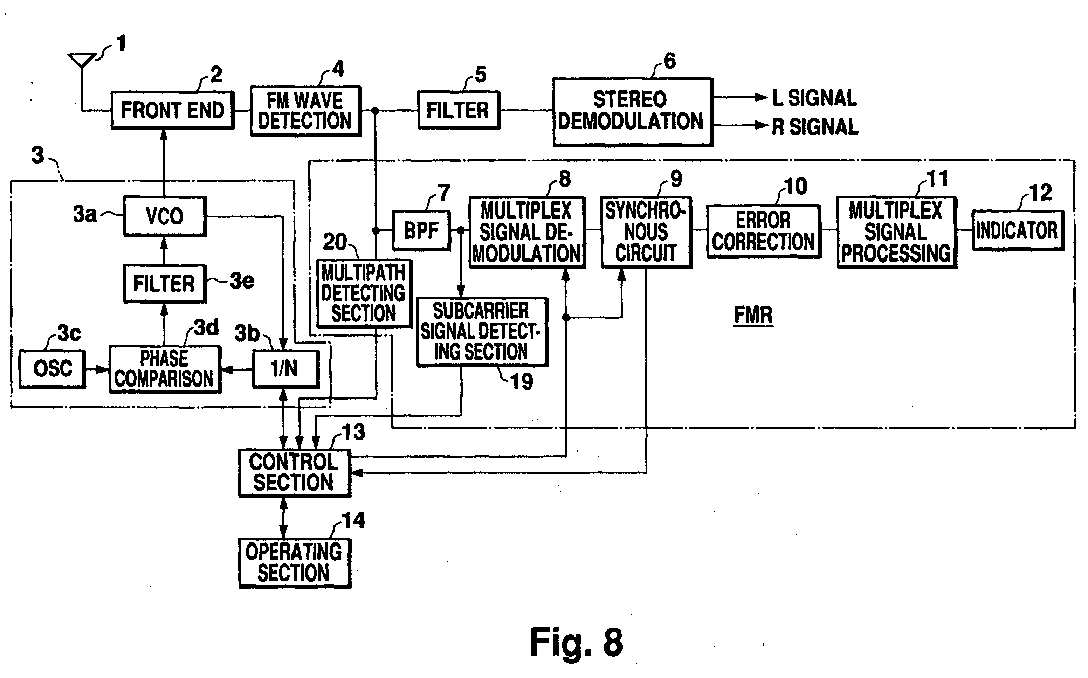

Figure 8 is an illustration showing the fourth embodiment obtained by providing the multipath detecting section 20 for the embodiment in Fig. 3.

In the embodiment in Fig. 8, the control section 13 stops the operation of the subcarrier signal detecting section 19 or ignores a detection output when a multipath is detected by the multipath detecting section 20, supplies a control signal to the synchronization circuit 9, decreases an allowable number of bit errors set by the block protection circuit 17, and lowers the probability of erroneous determination of block synchronization.

In this case, it is also possible to only stop or ignore the operation of detecting a subcarrier signal.

## Claims

1. An FM multiplex broadcast receiving circuit for receiving an FM multiplex signal in which a digital information signal is superimposed on an FM broadcast signal, comprising detection means for detecting whether a broadcast signal being received is a multiplex broadcast or not **characterised in that** said detection means (9) is responsive to block synchronisation detection of a received digital information signal.

2. The FM multiplex broadcast receiving circuit according to claim 1, wherein said detection means comprises first detection means (19) for generating a first detection signal in accordance with the level of a subcarrier signal to be modulated by said digital information signal and second detection means (9) for generating a second detection signal in accordance with block synchronisation detection of said digital information signal.

3. The FM multiplex broadcast receiving circuit according to claim 2, wherein said second detection means (9) is arranged to perform the detecting operation in response to detection of a multiplex information signal by said first detection means (19).

4. The FM multiplex broadcast receiving circuit according to claim 1, wherein said detection means comprises first detection means (19) for generating a first detection signal in accordance with whether the frequency of a subcarrier signal to be modulated by said digital information signal is in a predetermined frequency range or not and second detection means (9) for generating a second detection signal in accordance with block synchronisation detection of said digital information signal.

5. The FM multiplex broadcast receiving circuit according to claim 4, wherein said second detection means (9) is arranged to perform the detecting operation in response to detection of a multiplex information signal by said first detection means (19).

6. An FM multiplex broadcast receiving circuit as claimed in any preceding claim further comprising multipath detection means (20) for detecting the presence of a multipath component.

7. The FM multiplex broadcast receiving circuit according to claim 6, wherein said multiplex information detection means (9) is arranged to be controlled by a detection signal of said multipath detection means (20).

8. The FM multiplex broadcast receiving circuit according to claim 7, wherein said detection means (9) is operative to detect a multiplex information signal by said block synchronisation detection, in response to detection of a multipath by said multipath detection means (20).

9. A receiver for receiving an FM multiplex signal in which a digital information signal is superimposed on an FM broadcast signal, comprising an FM multiplex broadcast receiving circuit as claimed in any preceding claim.

## Patentansprüche

1. FM Multiplex-Sendeempfangsschaltung zum Empfangen eines FM Multiplex-Signals, in dem ein digitales Informationssignal auf ein FM-Sendesignal aufgelagert ist, umfassend Erkennungsmittel zum Erkennen, ob ein empfangenes Sendesignal eine Multiplex-Sendung ist oder nicht,
**dadurch gekennzeichnet, dass** das Erkennungsmittel (9) auf Blocksynchronisationserkennung eines empfangenen digitalen Informationssignals anspricht.

2. FM Multiplex-Sendeempfangsschaltung nach Anspruch 1, worin das Erkennungsmittel umfasst:
ein erstes Erkennungsmittel (19) zum Erzeugen eines ersten Erkennungssignals entsprechend dem Pegel eines Hilfsträgersignals, das durch das digitale Informationssignal zu modulieren ist, sowie ein zweites Erkennungsmittel (9) zum Erzeugen eines zweiten Erkennungssignals entsprechend der Blocksynchronisationserkennung des digitalen Informationssignals.

3. FM Multiplex-Sendeempfangsschaltung nach Anspruch 2, worin das zweite Erkennungsmittel (9) angeordnet ist, um den Erkennungsbetrieb in Antwort auf die Erkennung eines Multiplex-Informationssignals durch das erste Erkennungsmittel (19) durchzuführen.

4. FM Multiplex-Sendeempfangsschaltung nach Anspruch 1, worin das Erkennungsmittel umfasst:
ein erstes Erkennungsmittel (19) zum Erzeugen eines ersten Erkennungssignals dementsprechend, ob die Frequenz eines von dem digitalen Informationssignal zu modulierenden Hilfsträgersignals in einem vorbestimmten Frequenzbereich liegt oder nicht, sowie ein zweites Erkennungsmittel (9) zum Erzeugen eines zweiten Erkennungssignals entsprechend der Blocksynchronisationserkennung des digitalen Informationssignals.

5. FM Multiplex-Sendeempfangsschaltung nach Anspruch 4, worin das zweite Erkennungsmittel (9) angeordnet ist, um den Erkennungsbetrieb in Antwort auf die Erkennung eines Multiplex-Informationssignals durch das erste Erkennungsmittel (19) durchzuführen.

6. FM Multiplex-Sendeempfangsschaltung nach einem der vorhergehenden Ansprüche, die ferner ein Mehrweg-Erkennungsmittel (20) umfasst, um das Vorhandensein einer Mehrwegkomponente zu erkennen.

7. FM Multiplex-Sendeempfangsschaltung nach Anspruch 6, worin das Multiplex-Informations-Erkennungsmittel (9) so angeordnet ist, dass es durch ein Erkennungssignal des Mehrweg-Erkennungsmittels (20) gesteuert wird.

8. FM Multiplex-Sendeempfangsschaltung nach Anspruch 7, worin das Erkennungsmittel (9) betreibbar ist, um ein Multiplex-Informations-Signal durch die Blocksynchronisationserkennung in Antwort auf die Erkennung eines Mehrwegs durch das Mehrweg-Erkennungsmittel (20) zu erkennen.

9. Empfänger zum Empfangen eines FM Multiplex-Signals, in dem ein digitales Informationssignal auf ein FM-Sendesignal aufgelagert ist, umfassend eine FM-Multiplex-Sendeempfangsschaltung nach einem der vorhergehenden Ansprüche.

## Revendications

1. Circuit de réception de diffusion générale multiplex FM destiné à recevoir un signal multiplex FM dans lequel un signal d'informations numériques est superposé à un signal de diffusion générale FM, comportant un moyen de détection destiné à détecter si un signal de diffusion générale en cours de réception est une diffusion générale multiplex ou non, **caractérisé en ce que** ledit moyen (9) de détection réagit à une détection de synchronisation de bloc d'un signal d'informations numériques reçu.

2. Circuit de réception de diffusion générale multiplex FM selon la revendication 1, dans lequel ledit moyen de détection comporte un premier moyen (19) de détection destiné à produire un premier signal de détection conformément au niveau d'un signal de sous-porteuse devant être modulé par ledit signal d'informations numériques, ainsi qu'un deuxième moyen (9) de détection destiné à produire un deuxième signal de détection conformément à une détection de synchronisation de bloc dudit signal d'informations numériques.

3. Circuit de réception de diffusion générale multiplex FM selon la revendication 2, dans lequel ledit deuxième moyen (9) de détection est agencé de sorte à exécuter l'opération de détection en réponse à une détection d'un signal d'informations multiplex par ledit premier moyen (19) de détection.

4. Circuit de réception de diffusion générale multiplex FM selon la revendication 1, dans lequel ledit moyen de détection comporte un premier moyen (19) de détection destiné à produire un premier signal de détection selon que la fréquence d'un signal de sous-porteuse, devant être modulé par ledit signal d'informations numériques, se trouve ou non dans une gamme de fréquences prédéterminée, ainsi qu'un deuxième moyen (9) de détection destiné à produire un deuxième signal de détection conformément à une détection de synchronisation de bloc dudit signal d'informations numériques.

5. Circuit de réception de diffusion générale multiplex FM selon la revendication 4, dans lequel ledit deuxième moyen (9) de détection est agencé de sorte à exécuter l'opération de détection en réponse à une détection d'un signal d'informations multiplex par ledit premier moyen (19) de détection.

6. Circuit de réception de diffusion générale multiplex FM selon l'une quelconque des précédentes revendications comportant de plus un moyen (20) de détection multivoie destiné à détecter la présence d'une composante multivoie.

7. Circuit de réception de diffusion générale multiplex FM selon la revendication 6, dans lequel ledit moyen (9) de détection d'informations multiplex est agencé de sorte à être commandé par un signal de détection dudit moyen (20) de détection de chemin multiple.

8. Circuit de réception de diffusion générale multiplex FM selon la revendication 7, dans lequel ledit moyen (9) de détection est opérant pour détecter un signal d'informations multiplex par ladite détection de synchronisation de bloc en réponse à une détection multivoie par ledit moyen (20) de détection multivoie.

9. Récepteur destiné à recevoir un signal multiplex FM dans lequel un signal d'informations numériques est superposé à un signal de diffusion générale FM, comportant un circuit de réception de diffusion générale multiplex FM tel que revendiqué dans l'une quelconque des précédentes revendications.
